Europäisches Patentamt

European Patent Office

Office européen des brevets

(11) Publication number: **0 153 453**
**B1**

(12) **EUROPEAN PATENT SPECIFICATION**

(45) Date of publication of patent specification: 04.05.88

(51) Int. Cl.⁴: **F 16 H 9/24**

(21) Application number: **84113347.3**

(22) Date of filing: **06.11.84**

(54) V-belt transmission apparatus.

(30) Priority: **07.11.83 JP 171320/83**

(43) Date of publication of application:
**04.09.85 Bulletin 85/36**

(45) Publication of the grant of the patent:
**04.05.88 Bulletin 88/18**

(84) Designated Contracting States:
**DE FR NL**

(56) References cited:
**EP-A-0 047 587**
**DE-A-1 960 350**
**DE-A-3 039 337**
**FR-A- 362 422**
**GB-A-2 088 018**
**JP-A-57 018 836**
**US-A-2 231 920**
**US-A-4 386 921**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Hattori, Torao**
**1-13-28, Shirako**
**Wako-shi Saitama-ken (JP)**

(74) Representative: **Melzer, Wolfgang, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

Courier Press, Leamington Spa, England.

## Description

This invention relates to a V belt type power transmission apparatus used for a stepless variable change speed transmission for a vehicle or the like, and is more particularly directed to a V belt transmission apparatus as specified in the first part of claim 1.

An apparatus of this type is known from JP—A—57 18 836. The known V-shaped metallic member comprises on its portions on both sides of the groove foot-like projections, the tip of which showing to the outer surface of the V-shaped metallic member, respectively. The stopper member comprises respectively correspondingly formed recesses, such that stopper member can be shipped in lengthwise direction of the belt over the V-shaped metallic member.

In this case, from such a standpoint of view that the engaging groove has to be so made in the groove wall portion as to leave such a predetermined margin from a top of the groove wall portion giving thereto a necessary mechanical strength it is inevitable to form the groove wall portion into one having a comparatively large height corresponding to a total height of the thickness of the metallic belt, the groove width of the horizontal engaging groove positioned outer than the metallic belt and the foregoing predetermined margin, and as a result there are involved such inconveniences that each V-shaped metallic member is increased in height, and the whole size and weight of the V belt assembly are increased.

This invention has for its object to further develop the generic apparatus, i.e. a V belt transmission apparatus of the above type in which the engagement of V-shaped metallic member and the stopper member is simple while those member need a decreased height.

To fulfil this object the invention is characterized as pointed out in the second part of claim 1.

Embodying examples of this invention will be explained with reference to the accompanying drawings:—

Fig. 1 is a side view, partly in section, of part of one embodying example of this invention apparatus,

Fig. 2 is a top plan view thereof,

Fig. 3 is a sectional view taken along the line III—III in Fig. 1,

Fig. 4 is a perspective view of a V-shaped metallic member thereof,

Fig. 5 is a perspective view of a stopper member thereof,

Fig. 6 is a side view, partly in section, of a part of another embodying example of this invention apparatus and

Fig. 7 is a top plan view thereof.

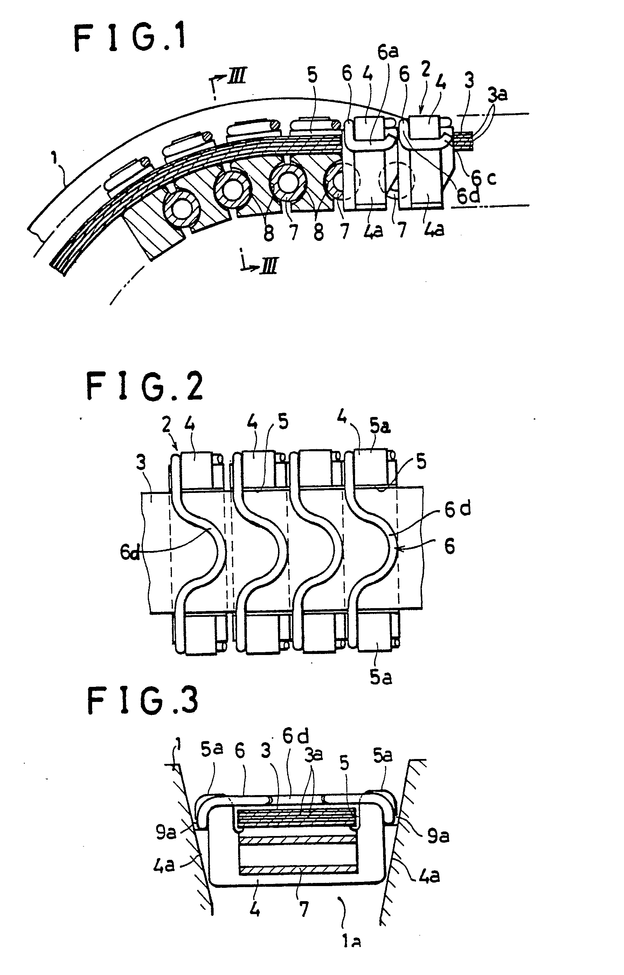

Referring to Figs. 1 to 3, numeral 1 denotes a V pulley on a driving side, and a V belt assembly 2 is applied between the pulley 1 and a V pulley (not illustrated) on a driven side for effecting a power transmission.

The V belt assembly 2 is so constructed that a large number of V-shaped metallic members 4 are disposed in series along on an endless metallic belt 3, which comprises plural hoop made belt members 3a put one upon in layers, in such a manner that each of the V-shaped metallic member 4, each member 4 having a groove 5 and, on both lateral sides thereof, inclined outer surfaces 4a, 4a adapted to be in contact with a V groove 1a of the pulley 1, is mounted, at its groove 5 made therein and open outwards, on the metallic belt 3 from inside the belt 3. A stopper member 6 positioned outside an outer surface of the metallic belt 3 is provided in the groove 5 of the V-shaped metallic member 4 for preventing the V-shaped metallic member 4 from coming off inwards.

In the illustrated example, a roller 7 is so interposed between respective adjacent two of the V-shaped metallic members 4 as to be positioned inside the metallic belt 3. At least one of mutually opposite front and rear roller receiving surfaces 8, 8 of the adjacent two V-shaped metallic members 4, 4 is formed into an arc surface of a comparatively large curvature, such that when the V-shaped metallic member 4 is brought into engagement with and is pushed outwards by the V pulley 1, the receiving surfaces 8, 8 provide a wedge action. Thereby a gap between the V-shaped metallic members 4, 4 adjacent one with another through the roller 7 is wedged to be widened, and there is applied thereto, as a whole, a force in the direction of increasing the turning radius of each V-shaped metallic member 4. Consequently, a pressure contact force of each V-shaped metallic member 4 against the metallic belt 3 can be increased, and the metallic belt 3 can be given a tension force through each V-shaped metallic member 4.

According to this invention, end portions on both end portions in the groove width direction of the V-shaped metallic member 4, of the stopper member 6 are so engaged with groove wall portions 5a, 5a located on both lateral sides of the groove 5 as to be positioned inner than the outer surface position of the metallic belt 3, that is, lower than the upper surface position of the metallic belt 3 in the drawings.

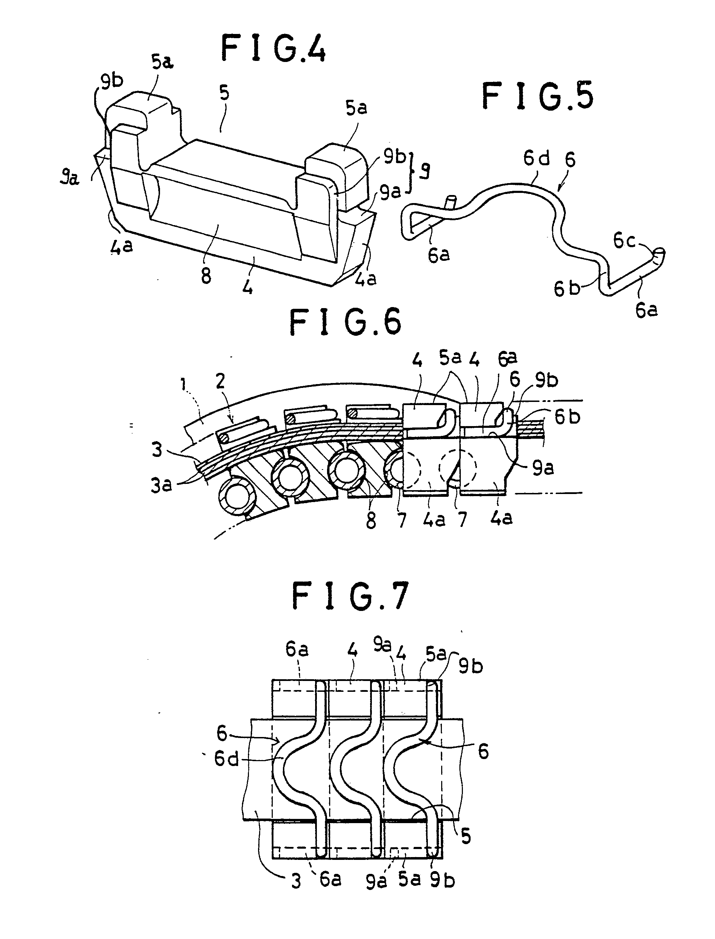

In this case, each end portion may be so engaged with each corresponding groove wall portion 5a as no to be moved forwards and rearwards in the lengthwise direction of the metallic belt 3, in the illustrated example, as shown clearly in Figs. 1 and 4. A curved or crooked engaging groove 9 comprises a horizontal groove part 9a extending forwards and rearwards in the lengthwise direction of the metallic belt 3 and vertical groove parts 9b, 9b extending outwards and inwards in the thickness direction of the metallic belt 3. Said groove 9 is formed in a wall surface of each groove wall portion 5a so that the both end portions of the stopper member 6 may be positioned inner than the outer surface position of the metallic belt 3, that is, lower than the upper surface position of the metallic belt 3 in those figures. As shown in Fig. 5, the stopper member 6 is formed into a belt one having each end portion which comprises a horizontal part 6a, a downwardly vertical part 6b and an upwardly vertical end part 6c so as to extend along the shape of the engaging groove 9 for being brought into engagement with the foregoing curved engaging groove 9.

In this embodying example, the curved engaging groove 9 is formed in the wall surface of a lateral outside part of the groove wall portion 5a, but the same may be of course formed in the wall surface of a lateral inside part thereof. A modification can be considered that, as shown in Figs. 6 and 7, the curved engaging groove 9 is formed into a nearly L-shaped one comprising the horizontal groove part 9a and the vertical groove part 9b on either one of the forward and rearward edges of the lateral outer surface thereof so that a modified stopper member 6 having the horizontal part 6a and the vertical part 6b may be prevented from coming off in the front and rear directions by the vertical groove part 9b and a forward or rearward end surface of the groove wall portion 5a of the adjacent V-shaped metallic member 4. In the above examples, the stopper member 6 is made of a resilient wire material bent at its middle portion 6d into a Ω form so that the horizontal parts 6a thereof may be inserted in and engaged with the respective engaging grooves 9 by its own resilient force. In operation, the stopper member 6 is given a large centrifugal force during a high speed turning of the V belt assembly 2. In conjunction with deformation of the stopper member 6 caused by this centrifugal force, there is generated a force in such a direction that the distance between the two end portions is narrowed. If, accordingly, the curved engaging groove 9 is made especially in the lateral outside wall surface of the groove wall portion 5a as mentioned above, the engaging force of the end portion in relation to the engaging groove 9 can be strengthened, and it can be assured that there is not caused any coming-off of the stopper member 6 even when it is turned at high speed turning of V belt assembly 2.

Then the operation of this invention apparatus will be explained as follows:—

The stopper member 6 is so brought in engagement at the end portions thereof with the groove wall portions 5a of the V-shaped metallic member 4 that the engaging positions of the end portions thereof may be inner than the outer surface position of the metallic belt 3, so that, dislike the conventional apparatus wherein the stopper member is so engaged with the groove wall portion the engaging positions of the end portions thereof may be outer than the outer surface position of the metallic belt. It is not required, in principal, for each groove wall portion 5a to have any margin protruded outwards beyond the outer surface position of the metallic belt 3. It is possible to form the groove wall portion 5a into one having a comparatively small height nearly equal to the thickness of the metallic belt 3, so that the whole of the V-belt assembly 2 can be decreased in size and weight.

In addition, by making the groove wall portion 5a small in height, it becomes possible that the V-shaped metallic member 4 is made of a sintered alloy such as of Fe-C-Cu series, Fe-C-Cu-Ni series or the like which is excellent in friction property in oil. Namely since the sintered alloy is low in mechanical strength, especially, in impact resistance value, if the groove wall portion 5a is made comparatively large in height, it is difficult to form the sintered alloy into the V-shaped metallic member because of the low mechanical strength. In this respect, it becomes possible to use the sintered alloy because the groove wall portion 5a can be made small in height according to this invention. Furthermore in a case where the metallic member 4 is formed into such a one that, as shown in Fig. 4, the shape thereof is complicated and the roller receiving surfaces 8, 8 thereof have deeply concaved ones, there are also such advantages that the manufacturing work thereof can be facilitated and the mass-productivity thereof can be improved by using the sintered alloy.

Thus according to this invention, the end portions of the stopper member are so engaged with the groove wall portions of the groove as to be positioned inner than the outer surface position of the metallic belt, so that the respective groove wall portions of a V-shaped metallic member can be made into one having a comparatively small height nearly equal to the thickness of the metallic belt, and consequently the V belt assembly can be decreased in size and weight, and the freedom in selection of the quality of the material for the V-shaped metallic member can be increased.

## Claims

1. A V belt transmission apparatus of the type that a large number of V-shaped metallic members (4) each having a groove (5) are disposed in series along on an endless metallic belt (3) to form, as a whole, a V belt assembly (2), which is applied between V pulleys on a driving side and a driven side for effecting a power transmission, and each of the respective V-shaped metallic members (4) is mounted, at its groove (5) made therein and open outwards, on the metallic belt (3) from inside the belt, and a stopper member (6) positioned outside an outer surface of the metallic belt (3) is provided in the groove (5) for preventing the V-shaped metallic member (4) from coming off inwards, whereby respective wall portions on both sides in the groove (5) width direction of the V-shaped metallic member (4) and corresponding end portions of the stopper member (6) are so in engagement with the respective groove wall portions on both sides of the groove (5) of the V-shaped metallic member (4) as to be positioned inner than the outer surface position of the metallic belt (3), characterized in that a curved engaging groove (9) comprising a horizontal groove part (9a) extending forwards and rearwards along the lengthwise direction of the metallic belt (3) and a vertical groove part (9b) extending from at least one of front and rear end of the horizontal groove part (9a) along the thickness direction of the metallic belt (3) is made in a wall surface of each of the respective groove wall portions, and in that each of the respective end portions of the stopper member (6) is formed into a bent one extending along the shape of the curved engaging groove (9) and is brought into engagement with the curved engaging groove (9).

2. A V belt transmission apparatus as claimed in claim 1, characterized in that each of the respective curved engaging groove (9) for engaging each of the end portions of the stopper member (6) is made in a lateral outer wall surface of the respective groove wall portion.

3. A V belt transmission apparatus as claimed in claim 1 or 2, characterized in that each V-shaped metallic member (4) is made of a sintered alloy.

**Patentansprüche**

1. Keilriemengetriebe des Typs, bei dem eine große Anzahl von V-förmigen metallischen Teilen (4), von denen jedes eine Nut (5) hat, in Reihe längs eines endlosen metallischen Bandes (3) angeordnet ist, um als Ganzes einen Keilriemenaufbau (2) zu bilden, der zwischen Keilriemenscheiben auf einer antreibenden Seite und einer angetriebenen Seite zum Bewirken einer Kraftübertragung verwendet wird, bei dem jedes der jeweiligen V-förmigen metallischen Teile (4) bei seiner Nut (5), die darin ausgebildet und nach außen offen ist, auf dem metallischen Band (3) von der Innenseite des Bandes her angebracht ist und bei dem ein Abschlußteil (6), das außerhalb einer äußeren Oberfläche des metallischen Bandes (3) positioniert ist, in der Nut (5) zu dem Zweck vorgesehen ist, das V-förmige metallische Teil (4) daran zu hindern, einwärts abzufallen, wodurch jeweilige Wandabschnitte auf beiden Seiten in der Breitenrichtung der Nut (5) des V-förmigen metallischen Teils (4) und korrespondierende Endabschnitte des Abschlußteils (6) derart in Eingriff mit den jeweiligen Nut-Wandabschnitten auf beiden Seiten der Nut (5) des V-förmigen metallischen Teils (4) stehen, daß sie weiter innen als die äußere Oberflächenposition des metallischen Bandes (3) positioniert sind, dadurch gekennzeichnet, daß eine gekrümmte Eingriffsnut (9), die einen horizontalen Nutteil (9a), der sich vorwärts und rückwärts längs der Längenrichtung des metallischen Bandes (3) erstreckt, und einen vertikalen Nutteil (9b) enthält, der sich von zumindest einem vorderen und hinteren Ende des horizontalen Nutteils (9a) erstreckt, in einer Wandoberfläche jeder der jeweiligen Nut-Wandabschnitte gebildet ist, und daß jeder der jeweiligen Endabschnitte des Abschlußteils (6) als ein gekrümmter Endabschnitt ausgebildet ist, der sich längs der Form der gekrümmten Eingriffsnut (9) erstreckt und in Eingriff mit der gekrümmten Eingriffsnut (9) gebracht ist.

2. Keilriemengetriebe nach Anspruch 1, dadurch gekennzeichnet, daß jede der jeweiligen gekrümmten Eingriffsnuten (9) zum Ineingriffbringen mit jedem der Endabschnitte des Abschlußteils (6) in einer seitlichen äußeren Wandoberfläche des jeweiligen Nut-Wandabschnitts gebildet ist.

3. Keilriemengetriebe nach Anspruch 1 oder 2, dadurch gekennzeichnet, daß jedes der V-förmigen metallischen Teile (4) aus einer gesinterten Legierung hergestellt ist.

**Revendications**

1. Dispositif de transmission à courroie trapézoïdale du type dans lequel un grand nombre d'organes métalliques trapézoïdaux (4) ayant chacun une gorge (5) sont disposés en série le long d'une courroie métallique sans fin (3) de façon à former dans l'ensemble un système à courroie trapézoïdale (2) qui est disposé entre des poulies trapézoïdales se trouvant d'un côté moteur et d'un côté entraîné pour effectuer une transmission de puissance, et dans lequel chacun des organes métalliques trapézoïdaux respectifs (4) est monté, au niveau de sa gorge (5) qui est formée dans celui-ci et qui s'ouvre vers l'extérieur sur la courroie métallique (3), du côté de l'intérieur de la courroie, et dans lequel un organe de blocage (6) disposé à l'extérieur d'une surface extérieure de la courroie métallique (3) est prévu dans la gorge (5) pour empêcher l'organe métallique trapézoïdal (4) de se dégager vers l'intérieur, les parties de paroi respectives se trouvant sur les deux côtés dans la direction de la largeur de la gorge (5) de l'organe métallique trapézoïdal (4) et les parties d'extrémité correspondantes de l'organe de blocage (6) s'engageant sur les parties de paroi de gorge de part et d'autre de la gorge (5) de l'organe métallique trapézoïdal (4) de façon à ce qu'elles soient disposées plus à l'intérieur que la surface extérieure de la courroie métallique (3), caractérisé en ce qu'une gorge d'engagement incurvée (9) comprenant une partie de gorge horizontale (9a) s'étendant vers l'avant et vers l'arrière dans la direction longitudinale de la courroie métallique (3), et une partie de gorge verticale (9b) s'étendant entre au moins une extrémité avant et une extrémité arrière de la partie de gorge horizontale (9a) dans le sens de l'épaisseur de la courroie métallique (3), est réalisée dans une surface de la paroi de chacune des parties de paroi de gorge respectives, et en ce que chacune des parties d'extrémité respectives de l'organe de blocage (6) est incurvée et s'étend le long de la forme de la gorge d'engagement incurvée (9) et est engagée dans la gorge d'engagement incurvée (9).

2. Dispositif de transmission à courroie trapézoïdale selon la revendication 1, caractérisé en ce que chacune des gorges incurvées respectives (9) destinées à l'engagement de chacune des parties d'extrémité de l'organe de blocage (6) est réalisée dans la surface extérieure latérale de la paroi de la partie respective de la gorge.

3. Dispositif de transmission à courroie trapézoïdale selon la revendication 1 ou 2, caractérisé en ce que chacun des organes métalliques trapézoïdaux (4) est constitué d'un alliage traité.

# FIG.1

# FIG.2

# FIG.3

# FIG.4

# FIG.5

# FIG.6

# FIG.7